# EUROPEAN PATENT APPLICATION

(11) **EP 3 269 231 A1**
(43) Date of publication of application: **17.01.2018**
(21) Application number: 16178861.7
(22) Date of filing: 11.07.2016
(51) Int. Cl.: A01G 7/04, A01G 31/06

(54) **LIGHTINGSYSTEM FOR STOREHOUSE CULTIVATION**

(71) Applicant: Heliospectra AB (publ), 402 29 Göteborg (SE)
(72) Inventor: POHJANVOURI, Timo, 436 50 Hovås (SE); HILLBERG, Staffan, 431 36 Mölndal (SE); BÅNKESTAD, Daniel, 402 29 Göteborg (SE); LINDQVIST, Johan, 402 29 Göteborg (SE); GILLEY, Anthony, 425 43 Hisings-Kärra (SE)
(74) Representative: Awapatent AB

(57) **Abstract**

An illuminated cultivation storage system is presented. The system comprising a three-dimensional framework structure forming a grid of vertical or horizontal storage tunnels arranged to receive a plurality of storage containers holding growing crops. Moreover, the system comprises a plurality of lighting devices configured to illuminate the storage containers arranged in the framework structure and a plurality of liquid cooling means attached to the lighting devices. The system also includes an illumination controller connected to each lighting devices and configured to control ON/OFF and spectral distribution of the lighting device, as well as a system controller arranged to control the illumination controllers whereby the lighting devices can be turned on or off based on position information relating to a position of each storage container in the grid.

## Description

### TECHNICAL FIELD OF THE INVENTION

The present invention relates to cultivation (raising plants) in vertically or horizontally stacked multi-layer storehouse systems. More specifically, the present invention relates to a plant illumination system for multi-layer storehouse cultivation.

### BACKGROUND

An emerging trend in agriculture or cultivation is the so called vertical farming or m³ farming concept as opposed to conventional surface farming or m² farming, and it is a rapidly growing trend considering the large number of vertical farming companies sprouting up across the globe during recent years. This trend is partly fueled by recent developments relating to energy efficiency and cost effectiveness for artificial lighting (e.g. light emitting diodes, LEDs) and environmental control, and partly due to the fact that vertical farming inherently results in an increased crop production as compared to traditional farming.

In short, vertical farming is based on the concept that a floor area or hall is provided with a storage system having a framework structure (e.g. racks), so as to increase the effective surface for growing plants. The plants are then grown in pots placed in containers (such as e.g. crates or trays) situated in this framework structure, the containers being stacked above and/or besides each other forming vertical and/or horizontal storehouse caches.

An example of a vertically stacked multi-layer storage system for plant growing is disclosed in WO 2015/082924. Here the needed lighting is provided in an integrated growth tray having a suitable lighting source located underneath each growth tray. However, such lighting system where the light source is situated on a bottom surface underneath each tray or container is not particularly energy efficient or cost effective. Moreover, problems relating to the power supply tend to cause problems as well. In particular, considering that a solution having open connectors where a light source associated with any particular tray is automatically connected and disconnected when the tray is positioned in and moved from its storage position, is rather sensitive to dust, dirt and pollen which is constantly present in such environments. Furthermore, by having the light sources arranged on a bottom surface of each tray may lead to unfavorable growing conditions for the plants in those trays due to heat dissipation from the light source.

Moreover, such lighting system would not be suitable, due to lack of heat dissipation, for storage systems having a maximized storage density, i.e. storage system without any aisles providing access between the rows of shelves, for example storage systems similar to the storage system disclosed in WO 2015/019055. These types of high density storage system consequently present major challenges in terms of high power density and temperature or thermal management.

For example, a growth area of 1.6 ha (16000 m²) would correspond to a 3-D storage system (as disclosed in WO 2015/019055) having dimensions of approximately 25m x 25m x 25m. A rough estimation of the power output (heat output) of a cultivation system of that size can be estimated by assuming an efficacy of the LED lighting to 2 µMol/J and a PPFD (Photosynthetic Photon Flux Density) at plant level to 150 µMol/m²/s and deriving power consumption [W/m²]. The resulting power consumption with the preceding estimations is then 75W/m², which results in a power output for a cultivation system of that size to 1.2 MW, where approximately half of it is produced as heat in the LEDs and the other half as radiation.

Thus, albeit the recent developments in terms of energy efficiency and cost effectiveness for artificial lighting systems, there are still problems relating to handling the high power density and high temperatures, as well as robustness, due to the rather harsh environment (e.g. due to dirt, pollen, moisture and heat) the lighting system must be able to manage or withstand.

There is therefore still a need for an improved lighting or illumination system for multi-layer storage system cultivation.

### SUMMARY OF THE INVENTION

It is therefore an object of the present invention to provide an illuminated cultivation storage system, which alleviates all or at least some of the above-discussed drawbacks of the presently known systems.

This object is achieved by means of an illuminated cultivation storage system as defined in the appended claims.

According to an aspect of the present invention, there is provided an illuminated cultivation storage system comprising a framework structure having a three-dimensional framework of horizontal and vertical structural elements forming a grid of vertical storage tunnels or horizontal storage tunnels, wherein each tunnel is arranged to receive a plurality of storage containers holding growing crops, the storage containers being arranged in a stacked formation in a vertical storage tunnel or in a train formation in a horizontal storage tunnel. The system further comprises a plurality of lighting devices attached to the framework structure, each lighting device being associated with a volume in at least one storage tunnel, and comprising at least one light source configured to illuminate a storage container residing in the volume; a liquid cooling arrangement coupled to the plurality of lighting devices, the liquid cooling arrangement being configured to cool the lighting devices; an illumination controller connected to each lighting device and configured to control ON/OFF, light intensity and spectral distribution of the lighting device in order to modulate growth of the growing crops illuminated by the lighting device; and a system controller arranged to control the illumination controller(s) in order to set the illumination controller(s) in an enabled state, in which the lighting device is controlled by the illumination controller, and a disabled state, in which the light device is turned OFF, based on position information relating to a position of each storage container in the grid, such that a particular illumination controller is disabled when a storage container is not present in the volume associated with a lighting device controlled by this particular illumination controller.

Hereby, a versatile and cost effective m³-farming system is presented with improved functionality in terms of power density handling and robustness. By means of the presented system it is possible to grow crops in storage containers arranged in a three-dimensional framework structure whereby the output greatly surpasses that of conventional green-house farming.

The controllers (i.e. illumination controller and system controller) are preferably microprocessors or any other type of computing device, and may be realized as software controlled processors. However, each controller may alternatively be realized wholly or partly in hardware.

The liquid cooling arrangement is in the present context to be interpreted as an arrangement or system of bodies or devices comprising fluid channels that carry liquid (e.g. water) in a closed loop system in order to transfer heat away from the lighting devices and to possibly cool the surrounding air. The liquid cooling arrangement may further comprise a heat-exchanger or similar connected to an external heating system (e.g. district heating) whereby the heat generated by the lighting system may be utilized for heating e.g. an office building, apartment building, or any other residential building.

Within the context of the present invention, it should be noted that the expression "illuminate a storage container" should be interpreted broadly; including direct and/or indirect (e.g. using adjacent objects having a reflective surface). Similarly, the expression "modulate growth of the growing crops" should be interpreted broadly, that is, it should be understood that the spectral distribution and the light intensity are selected depending for example on the current growth stage of the plants for the purpose of optimizing one or a plurality of parameters for growing the crops (or plants). Such parameters may for example include morphological traits such as stem elongation or leaf area. In addition, the light regime (intensity and spectral distribution) may be set to optimize plant growth with regards to growing the plants for optimizing taste, color, nutritional values, etc. of the plants. Further details regarding the illumination of the growing crops is e.g. disclosed in WO 2014/098735 or EP 2 710 883, by the same applicant, incorporated herein by reference.

Moreover, by providing a three dimensional framework on which a plurality of lighting devices and a liquid cooling arrangement are attached and combining this with an illumination controller and system controller, many of the challenges associated with vertical farming or m³-farming are overcome. In particular, challenges related to power density, temperature, robustness and cost effectiveness.

The present invention is based on the realization that in order to cater for future needs in term of farming or cultivation for the ever growing population in the world new and more efficient methods and systems for producing crops must be developed. The m³-farming concept has proved to be a promising concept however many technical challenges have, up until now, formed impassable obstacles. By attaching lighting devices and a liquid cooling arrangement together on the framework structure an efficient and precise cooling of the semiconductor components of the lighting devices is achieved whereby the temperature of the overall system can be kept at a tolerable level. Moreover, another advantage of the inventive system is that it is rid of open electrical interfaces/connectors, contact brushes and/or fluid connections since everything is attached to the framework structure and not part of any storage compartment, which drastically improves the robustness of the system. Since all components (lighting/cooling) are part of the base structure they are less prone to damage or malfunction due to wear and tear.

For example, prior known systems having the lighting devices or cooling arrangement form a part of the storage containers or being arranged on some auxiliary structure requires open electrical interfaces/connectors which run a high risk of contamination/malfunction due to the harsh environment (dirt, pollen, moisture etc.) associated with cultivation of growing crops. Additionally maintenance is a huge concern with these prior systems.

Further, it was also realized by the present inventors, that unit cost can be kept at a minimum by ridding the storage containers of any advanced functionality which together with the lower maintenance requirements and increased robustness lowers the overall cost of the system.

Preferably, the light source of the lighting device comprises at least one solid state light emitting element, including for example different types of light emitting diodes (LEDs). Thus, a light source can in the present context be understood as a point light source, but may however comprise one or more light emitting elements depending on the intended application and needs. As discussed above, using LEDs generally improves the efficiency of the illuminated cultivation storage system at the same time as improved heat management is possible. However, the inventive storage system may also be provided using one or a plurality of (general) light sources in combination with filters of different colors, with similar effects. Other possibilities are of course possible and within the scope of the invention.

In accordance with an embodiment of the invention, each lighting device is arranged above the volume associated therewith. Thus, the growing crops are illuminated from an elevated position in reference to the storage container holding the growing crops.

Further, in accordance with another embodiment of the invention, the light source(s) of the lighting devices are arranged only in a vicinity of the vertical structural elements. Hereby, the storage containers holding growing crops are illuminated by light sources emitting light from "corner" directions, if the storage containers are assumed to be of a rectangular or quadratic structure. If light sources are arranged in the vicinity of every vertical structural element, the storage containers can be illuminated from at least four directions, e.g. from each corner of the storage container.

In this case, some of the lighting devices may be mounted to a vertical structural element of the framework structure. One such mounted lighting device may further be arranged such that it can illuminate two adjacent storage containers, each storage container being for example illuminated by individual light sources of the lighting device. Each such lighting device may further comprise multiple light sources distributed along the vertical structural element. This allows illumination of different vertical levels of the container.

Further, in accordance with yet another embodiment of the invention, some of the lighting device comprises multiple light sources and is arranged such that the light sources are distributed between a pair of adjacent vertical structural elements. For example, some of the lighting devices may be attached to and extend between a pair of adjacent vertical structural elements of the framework structure. Alternatively, some of the lighting devices may be mounted to a horizontal structural element. The lighting devices can then be said to comprise one or more "light bars" extending between pairs of adjacent vertical structural elements, i.e. extending along and in parallel to the horizontal structural elements. The term light bar is in the present context to be understood as an elongated structure comprising a plurality of light sources distributed along the elongated structure. Furthermore, in the case of a storage compartment, arranged to house a single storage container, having a rectangular cross section, as seen from above, the lighting devices may be arranged to extend in parallel to the longer horizontal structural elements. A storage compartment is to be understood as a sub section or sub volume within a horizontal or vertical storage tunnel, arranged to house or contain one single storage container. Thus, in yet another embodiment of the invention, some of the lighting devices comprise at least one light bar and (each lighting device) has dual light distribution in order to be capable of illuminating at least a portion of two adjacent storage compartments. The lighting devices may each comprise two light bars such that each of the light bars illuminates one of the two adjacent storage compartments. Alternatively, each lighting device may comprise one light bar (e.g. a set of LEDs) and an optical arrangement whereby dual light distribution for the two adjacent storage compartments is achieved.

Further, in accordance with yet another embodiment of the present invention, some of the lighting devices are integrated with the framework structure. In other words, the lighting devices form a part of the framework structure and provide a stabilizing and strengthening effect to the whole framework. Moreover, an advantage of having the lighting devices integrated with the framework structure is that the framework structure can be made more cost effective. In more detail, the structural elements can be made of less or cheaper material since some of the structural strength will be compensated for by the lighting devices.

In accordance with another embodiment of the present invention, some of the lighting devices comprise at least one light source mounted on a heat sink, and wherein the liquid cooling arrangement includes channels formed in the heat sinks. Hereby, efficient cooling of the lighting devices, e.g. the semiconductor components of the lighting devices is achieved. Even further, in accordance with yet another embodiment of the present invention, the liquid cooling arrangement comprises liquid cooled convectors. The liquid cool convectors can be connected to the lighting devices, or be a part of the lighting devices as an integrated structure. A convector is in the present context to be understood as a device or structure having internal fluid channels through which a fluid runs in order to transfer heat from the surrounding environment (lighting device and ambient air) via the fluid movement, in order to cool the surrounding environment. For example, the liquid cooled convectors may have one or more fluid channels through which water (having a temperature in the range of 10°C - 90°C) moves, in order to transfer heat mainly from the surrounding air and partly from the lighting device to the moving water whereby the lighting device and the surrounding air is cooled. In another embodiment of the present invention, the liquid cooling arrangement comprises a first liquid circuit coupled to the convectors and a second liquid cooling circuit coupled to the lighting devices. The first circuit and the second circuit can be independent or serially connected such that a cooling fluid is first circulated in the first liquid cooling circuit and subsequently in the second liquid cooling circuit.

In other words, liquid cooling arrangement may be arranged such that a cooling fluid is first circulated through said liquid cooled convectors and secondly through the heat sinks arranged to cool the lighting device. This increases the efficiency of the cooling system and the cooling liquid is utilized more efficiently since the temperature of the lighting device is often much higher and therefore the cooling liquid temperature can be higher when passing through the heat sinks, and still achieve an adequate cooling effect of the lighting device.

Even further, in yet another embodiment of the present invention, the liquid cooling arrangement comprises channels integrated in the framework structure. The channels are configured to receive a cooling liquid running there through to transport heat from the surrounding environment. This allows for a more compact cooling solution for the illuminated cultivation storage system. Preferably, the channels are integrated into the structural elements of the framework structure having lighting devices mounted thereto. To some extent, the framework structure may then be utilized as a heat sink and/or a liquid cooled convector. For example, in the embodiment having lighting devices mounted only to vertical structural elements, then the liquid cooling arrangement may comprise channels integrated only in the vertical structural elements of the frame work structure. An analogous arrangement is conceivable if the lighting devices are mounted to the horizontal structural elements.

Even further, in accordance with yet another embodiment of the present invention, the illuminated cultivation storage system further comprises at least one load handling device operating laterally along openings of the grid of vertical or horizontal storage tunnels, the at least one load handling device being configured to move the storage containers arranged in the vertical or horizontal tunnels. The load handling devices are preferably configured to lift and move storage containers arranged in the vertical or horizontal tunnels. An example of a load handling device and its basic operation is disclosed in WO 2015/019055, incorporated herein by reference. However, the load handling device(s) can in the present invention be configured to communicate with the system controller, whereby the system controller receives input from the load handling device(s) comprising information about a position of each storage container in the storage system. Furthermore, the system controller may be configured to control the load handling device(s) based on temperature in a volume (or a different horizontal/vertical storage tunnel) within the framework structure, in order to facilitate ventilation or cooling of the storage system. Moreover, the system controller may be configured to control the load handling device(s) based on lighting parameters, e.g. to move a specific container holding growing crops to a different volume (or a different horizontal/vertical storage tunnel) based on the current needs in terms of lighting of the growing crops. Alternatively, the storage system may comprise a set of sensors within the framework structure in order to detect a presence of a storage container.

The system controller may then accordingly control each of the illumination controllers based on the received information from the load handling device(s) in order to most efficiently illuminate the growing crops. Furthermore, the system controller may control the illumination controller to form thermal tunnels or channels, by e.g. turning on high intensity illumination at specific sections or around specific vertical storage tunnels of the storage system, in order to control air flow within the storage system and achieve more efficient cooling. For example, the system controller may be configured to enable the lighting devices surrounding an empty tunnel in order to increase the temperature of the air within the empty tunnel and thereby form a thermal tunnel/channel. Moreover the system controller may be configured to control the load handling device in order to position specific containers at predetermined sections of the framework structure. For example the load handling device(s) may be instructed to arrange containers holding growing crops in need of high intensity light for a longer duration of time close to the outer edges of the framework structure in order to facilitate cooling and temperature management.

Thus, in yet another exemplary embodiment the system controller is further arranged to control the state of a particular illumination controller based on a temperature in a vicinity of this particular illumination controller. The temperature may be given by temperature sensors placed at various positions in the framework structure and connected to the system controller e.g. via a wireless link and/or via the illumination controllers.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a perspective view of an illuminated cultivation storage system having a plurality of storage containers holding growing crops arranged therein, in accordance with an embodiment of the present invention;
Fig. 2 is a cut-out top view of a cultivation storage system in accordance with an embodiment of the present invention;
Fig. 3 is a partly exploded perspective view of two vertical storage tunnels in an illuminated cultivation storage system in accordance with an embodiment of the present invention;
Fig. 4a is a perspective view of two vertical storage tunnels in an illuminated cultivation storage system in accordance with another embodiment of the present invention;
Fig. 4b is a top view of an illuminated cultivation storage system in accordance with the embodiment illustrated in Fig. 4a;
Fig. 5 is a perspective view of four horizontal storage tunnels in an illuminated cultivation storage system in accordance with yet another embodiment of the invention;
Fig. 6 is a schematic side-view of a set of vertical storage tunnels of an illuminated cultivation storage system in accordance with an embodiment of the present invention;
Fig. 7a is a schematic cross-sectional view of a lighting device with a liquid cooling arrangement in accordance with an embodiment of the present invention;
Fig. 7b is a schematic cross-sectional view of a lighting device with liquid cooling arrangement in accordance with another embodiment of the present invention;
Fig. 8 is a schematic flow chart illustrating a control and communication process in accordance with an embodiment of the invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In illustrations containing a large number of identical elements or devices, only a few of the devices will be provided with a reference mark in order to reduce clogging of the figures.

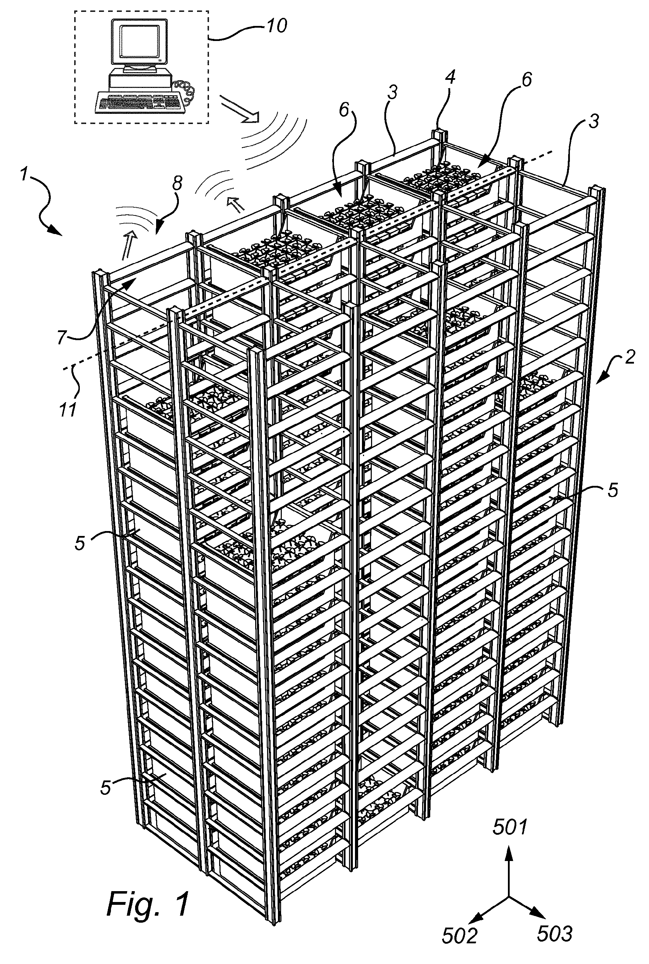

In Fig. 1 a perspective view illustration of an illuminated cultivation storage system 1 having a plurality of storage containers 5 holding growing crops 6 is provided. The storage system 1 has a framework structure 2 having a three-dimensional framework of horizontal structural elements 3 and vertical structural elements 4. Further, the framework structure 2 forms a grid of vertical storage tunnels in which the storage containers 5 may be stacked on top of each other along a vertical axis 501 of the storage system 1. The storage containers 5 are provided with open sides in order to facilitate illumination of the growing crops 6 by the lighting devices 7. The storage containers 5 may alternatively or additionally comprise a mesh-like body/structure, transparent body/structure or similar, through which light emitted from the lighting devices 7 may propagate. The storage containers 5 are accessible by an operator or a load handling device from the top opening via which the storage containers 5 may be inserted or removed. The term vertical storage tunnels is therefore in reference to the access opening whereby the storage containers 5 may be stacked vertically and accessed from the top openings of the vertical storage tunnels.

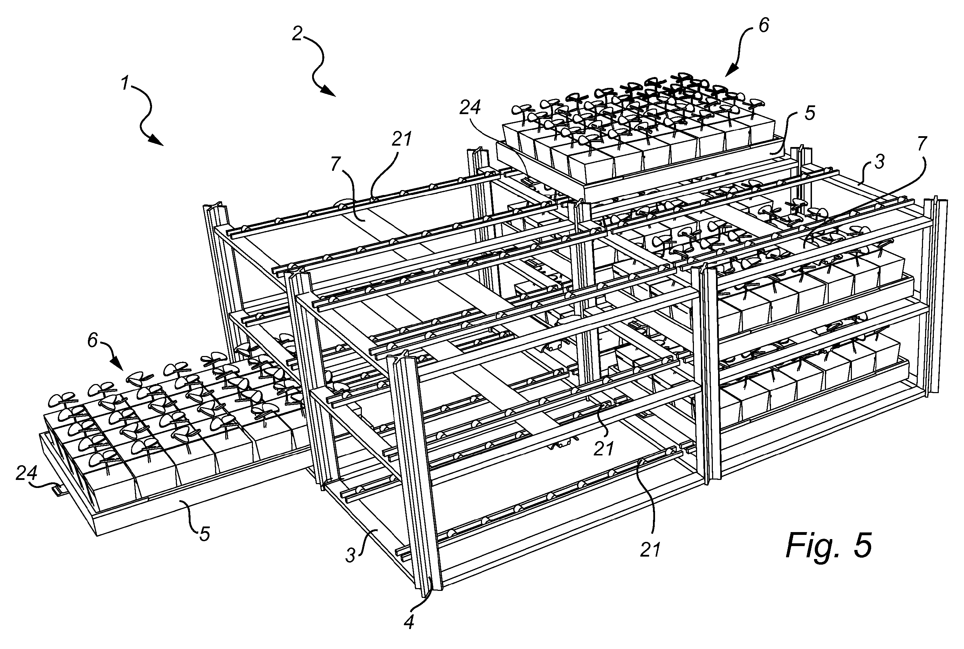

In an alternative embodiment (shown in Fig. 5) the framework structure 2 forms horizontal storage tunnels in which the storage containers 5 may be arranged in a train-formation. The storage containers 5 residing in a horizontal storage tunnel would then accordingly be accessible from a side opening via which the storage containers 5 may be inserted or removed.

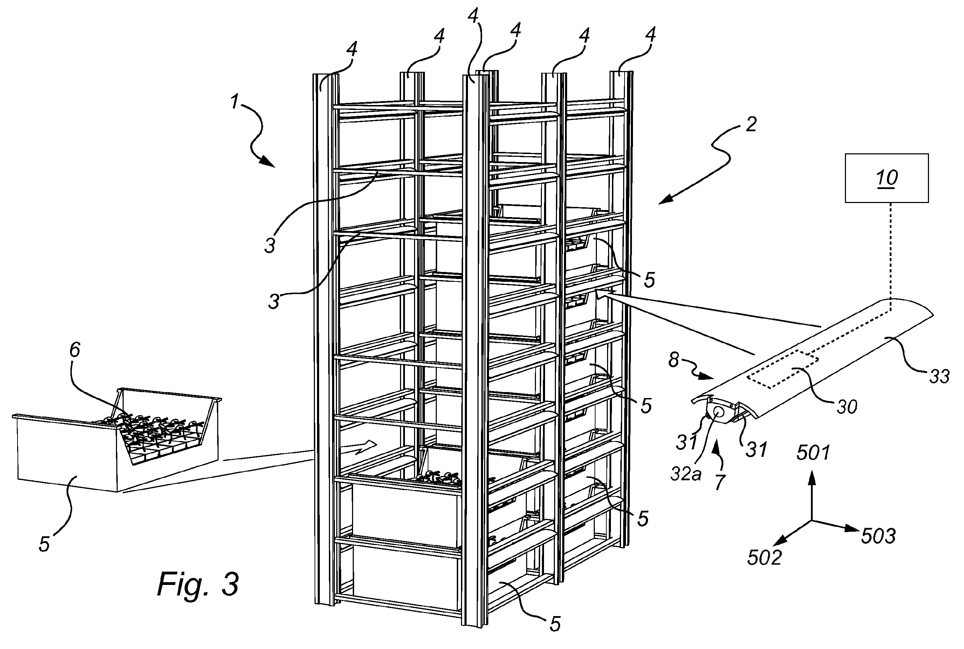

Further, the storage system 1 has a plurality of lighting devices 7 attached to the framework structure 2. Each lighting device 7 is associated with a volume in at least one of the vertical storage tunnels and configured to illuminate any storage container residing in the volume. For example, the lighting devices 7 arranged along the middle horizontal line 11 are associated with a volume in both of the adjacent vertical storage tunnels such that a single lighting device 7 can be configured to illuminate two adjacent storage containers 5, residing in separate vertical storage tunnels. Preferably, each lighting device is arranged above the volume associated therewith. Moreover, the storage system 1 has a liquid cooling arrangement 8 coupled to the plurality of lighting devices 7 and are configured to cool the lighting devices. The functional principles of the lighting devices and the liquid cooling arrangement will be further discussed in reference to Figs. 3 to 6. Moreover, the lighting devices in the embodiment illustrated in Fig. 1 are integrated into the framework structure 2 thereby providing to the stability of the framework structure 2 and reducing the need of additional horizontal structural elements 3. As illustrated, each lighting device 7 is mounted to and extends between a pair of adjacent vertical structural elements 4.

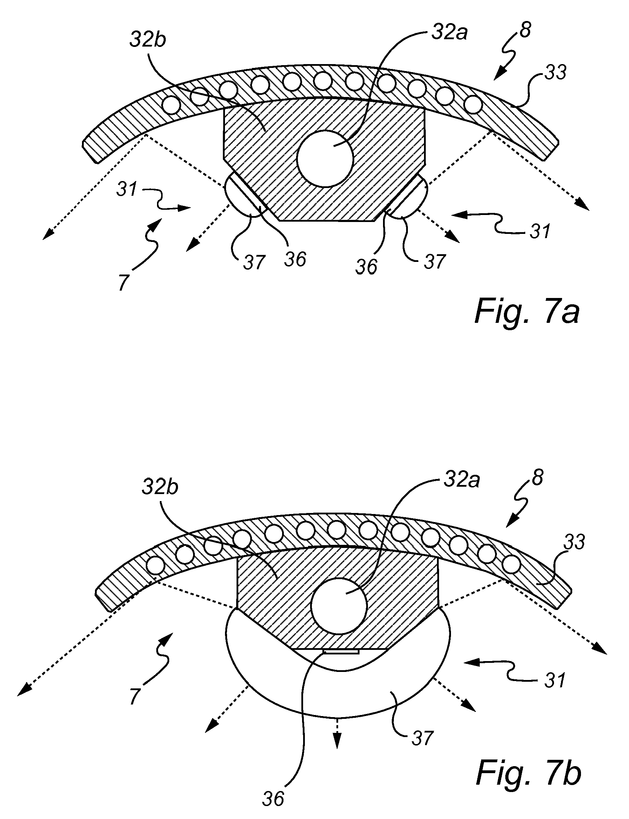

Even further, the storage system 1 comprises an illumination controller (not shown here) connected to each lighting device 7 and configured to control ON/OFF, light intensity and spectral distribution of the lighting device in order to modulate growth of the growing crops 8 illuminated by the lighting device 7. Preferably each lighting device 7 is provided with a separate illumination controller which may be integrated in each lighting device; however, one single illumination controller may be configured to control a plurality of lighting devices 7 in a section of the framework structure 2. Also, the storage system 1 has a system controller 10, schematically illustrated as a computer, which is configured to communicate with and control the illumination controller(s) (as indicated by the bolded arrows) in order to the set illumination controller(s) in an enabled state or a disabled state. The system controller 10, the illumination controller and their operation/function will be further described in reference to Figs. 3 and 7.

Also, the illuminated cultivation storage system may further comprise a power supply system (not shown) for supplying operating power to the lighting devices and to the illumination controllers. A part of the power supply system can be integrated into the framework structure. For example, the integrated part may be electrical connections which are integrated and sealed in the lighting devices and thereby protected from dirt, moisture, etc.

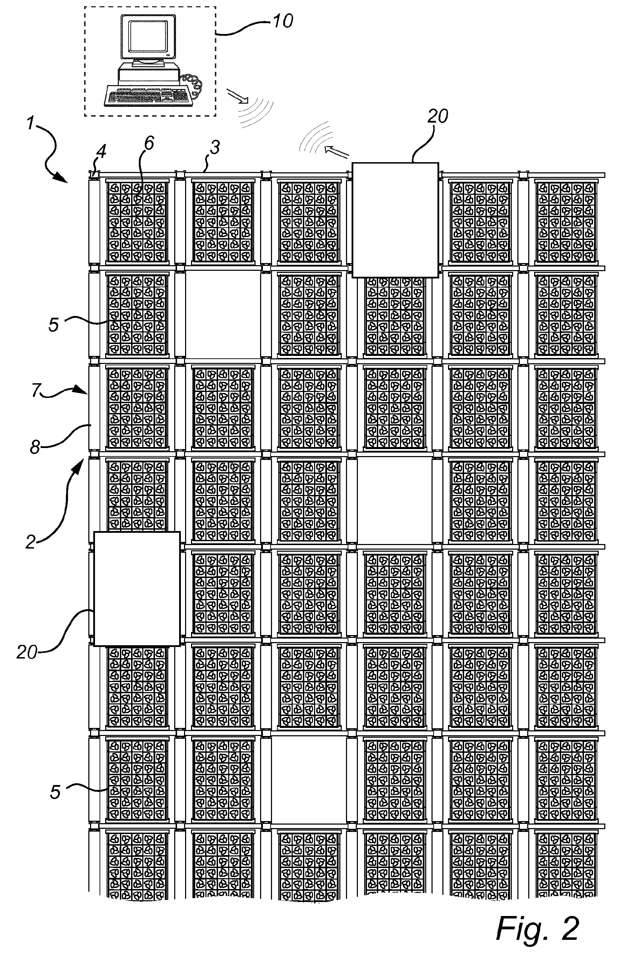

Fig. 2 illustrates a top-view perspective of an illuminated cultivation storage system as illustrated in Fig. 1, albeit with a larger number of vertical storage tunnels. Moreover, as indicated in Fig. 2 the storage system 1 may comprise a set of empty vertical (or horizontal) storage tunnels in order to facilitate load handling and/or for thermal management purposes. Further, a schematic illustration of a load handling device 20 is shown. The load handling device 20 is arranged to operate laterally, i.e. in a horizontal plane, along the openings of the grid of vertical storage tunnels and to move the storage containers 5 arranged in the vertical storage tunnels. The storage containers 5 can be lifted from one storage tunnel and lowered into another storage tunnel by the load handling device 20. Similarly, the load handling device 20 may be arranged to operate along openings of a grid of horizontal storage tunnels (not shown here) in order to move storage containers arranged therein. The load handling device 20 can then be said to operate laterally in a vertical plane.

Furthermore, Fig. 2 illustrates a communication path between the load handling device 20 and the system controller 10. This allows the system controller 10 to monitor and store the position of each storage container 5 within the framework structure 2. In more detail, the load handling device 20 may be configured to report every movement of a storage container 5 from one location to the next within the framework structure 2, whereby the system controller 10 can receive and store a position of each storage container 5. Moreover, each storage container 5 may for example be provided with barcodes, QR-codes or the like, arranged on an outer surface thereof, and each load handling device 20 may accordingly have a scanning device or scanning means (not shown) for reading the barcode or QR-code of a storage container 5. The load handling devices 20 may accordingly further also comprise processing circuitry and a memory unit for storing information retrieved from the scanning device whereby several useful parameters of the storage container 5 may be retrieved. The information may however be stored centrally e.g. in a memory unit connected to the system controller 10. For example, the parameters may comprise type of crops, arrival date of the storage container, preferred environmental parameters (e.g. lighting, moisture, temperature) of the crops, etc. Alternatively, the communication path may be unidirectional, i.e. the system controller 10 sends instructions to the load handling device 20 whereby the system controller 10 can be configured to monitor each movement of a storage container 5 within the storage system 1 and keep track of a current position and/or any past position of each storage container 5

However, in other embodiments the storage containers 5 may be moved manually by an operator or a semi-automated robot, whereby the location or position of each storage container 5 within the framework structure 2 may be provided manually to the system controller 10. The operator(s) may also be provided with a scanning device or other means for scanning QR-codes or bar codes provided on the storage containers 5 as described above.

Fig. 3 illustrates a partly exploded view of two vertical storage tunnels of a framework structure 2. Here an embodiment of the storage containers 5 can be seen in more detail with the open sides allowing for a better illumination of the crops 6 by the lighting devices 7. Further, the lighting devices 7 extend between pairs of vertical structural elements 4 and comprise two light sources 31 resulting in a dual light distribution for the lighting devices 7 in order to illuminate two adjacent storage containers 5. The lighting devices 7 are mounted to pairs of adjacent vertical structural elements 4 and arranged below the horizontal structural elements 3 extending between the same pair of vertical structural elements 4. The lighting devices 7 may alternatively be mounted to the horizontal structural elements 3. In this illustration the lighting device 7 has two light sources 31 configured to illuminate storage container(s) 5 arranged in a volume including portions of two vertical storage tunnels, i.e. a volume which is associated with that particular lighting device 7.

The liquid cooling arrangement 8 is here illustrated as a fluid channel 32a running through a heat-sink attached to the light sources 31, as well as liquid cooled convectors 33 attached to the upper surface of the lighting devices 7 and configured to cool the lighting devices 7 as well as the surrounding air. Moreover, the liquid cooled convectors 33 are arranged as arc-shaped covers in order to protect each lighting device 7 from dust and debris that may fall from elevated positions in reference to the lighting device 7. Also, as an option, the liquid cooled convectors 33 may be provided with a light reflecting surface on a bottom surface (the surface facing the lighting device it is attached to) in order to further increase amount of light illuminating the growing crops 6. The liquid cooled convectors 33 may also be provided with a light reflecting surface on a top surface (the surface facing away from the lighting device) in order to scatter more light within the storage system 1. The liquid cooling arrangement and the lighting devices will be further discussed in reference to Figs. 7a-c.

Even further, an illumination controller 30 is schematically illustrated at the extracted lighting device 7 to the right in Fig. 3, and the broken line indicates the connection and the communication path between the illumination controller 30 and the system controller 10, whereby the system controller 10 may control the illumination controller 30. The illumination controller(s) 30 and the system controller 10 are optionally wirelessly connected and capable of transferring data between each other.

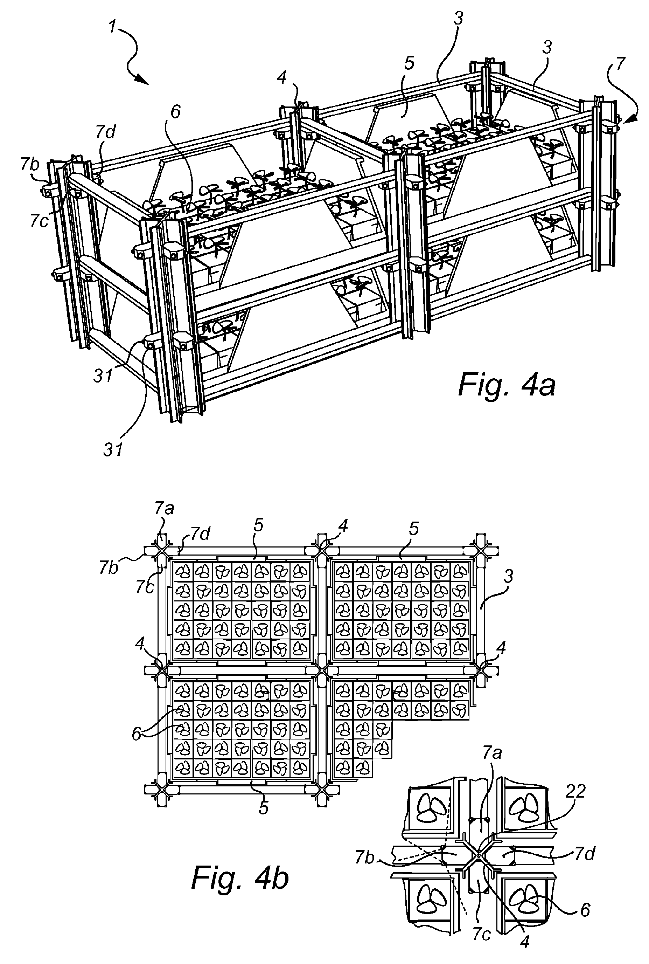

In Fig. 4a, a perspective view of an illuminated cultivation storage system 1 according to another exemplary embodiment of the invention is illustrated. The lighting devices 7 are herein attached to the vertical structural elements 4 and are arranged with point light sources in order to illuminate the storage containers 5 from a corner direction. However, the lighting devices 7 may comprise multiple light sources distributed along the vertical structural element 4. In other words, the lighting devices 7 can be arranged to extend along the vertical structural elements 4. Each of the lighting devices 7 comprises two light sources 31 arranged to illuminate the storage containers 5 from a corner direction of the storage containers 5. Hereby, it is possible for one lighting device 7 to illuminate at least a portion of two different storage containers 7 residing in a volume associated with the lighting device 7. This is further illustrated in the top view perspective in Fig. 4b, and in greater detail in the enlarged view of a vertical structural element 4 surrounded by four storage containers in the bottom right corner of Fig. 4b. The vertical structural element 4, in Fig. 4b, has four lighting devices 7a-d mounted thereto, and each lighting device 7a-d comprises two light sources arranged to illuminate two adjacent storage containers from a corner direction as indicated by the broken lines in association with lighting device 7b. However, the vertical structural element may have only two lighting devices having two light sources mounted on opposite sides, e.g. 7a + 7c or 7b + 7d and in order to illuminate all four storage containers arranged around the vertical structural element 4.

Moreover, the storage containers 5 may be arranged with open corners such that the light emitted from the lighting devices 7 may illuminate the growing crops more efficiently. Furthermore, the liquid cooling arrangement comprises fluid channels 22 integrated in the framework structure. In more detail, the liquid cooling arrangement has a fluid channels integrated only in the vertical structural elements 4 on which the lighting devices 7 are attached, such that each vertical structural elements 4 form a type of heat-sink for each lighting device 7 mounted thereto. Thus, the vertical structural elements 4 may be thereby efficiently cool the lighting devices and also the surrounding air. Similarly, if the lighting devices 7 are attached to the horizontal structural elements 3 they may form a part of the liquid cooling arrangement and comprise fluid channels through which a cooling fluid may flow.

In Fig. 5 a perspective view illustration of at least a segment of an illuminated storage system 1 having a framework structure 2 of horizontal 3 and vertical structural elements 4 forming a grid of horizontal storage tunnels is shown. Here, the storage containers 5 are arranged in a train formation and can be accessed from a side opening of the framework structure, and rolled in and out of the framework structure on a rail 21 comprising a plurality of wheels. The storage containers 5 can however be arranged to slide on a set of sliding rails (not shown). The storage containers 5 are connected to each other in the horizontal storage tunnel with connection elements 24 provided on each storage container. Similarly, as previously mentioned the lighting devices 7 may be arranged to have a longitudinal extension along an axis parallel to a longer axis of the storage container 5, if the storage containers 5 would have a rectangular shape, as seen from a top perspective.

Further, the lighting devices 7 are similar to the lighting devices disclosed in Figs. 1-3; however, in this embodiment they are mounted to a pair of adjacent horizontal structural elements 3. Alternatively the lighting devices 7 can be mounted to a pair of adjacent rails 21.

The lighting devices 7 has at least one light source arranged to illuminate the storage containers 5 residing directly below the lighting device 7. In an illuminated storage system having horizontal storage tunnels the lighting devices 7 are preferably mounted in a position centrally above each storage container, or centrally above a section/compartment of each horizontal storage tunnel arranged to contain/house a storage container 5. Moreover, the storage containers 5 are in the form of trays, whereby the growing crops can be more efficiently illuminated as there are no light obstructing bodies (e.g. storage container side walls) present.

An illuminated cultivation storage system 1 as shown in Fig. 5, having horizontal storage tunnels is advantageous in terms of lighting and complexity as compared to vertical storage tunnels. Further, the storage containers 5 are more easily accessible to manual operators as they can be moved via side openings. However, managing the energy density and temperature may be more complex as there are more mechanical structures involved. In lighting device 7 may have one or more light bars comprising one or more light sources (e.g. LEDs).

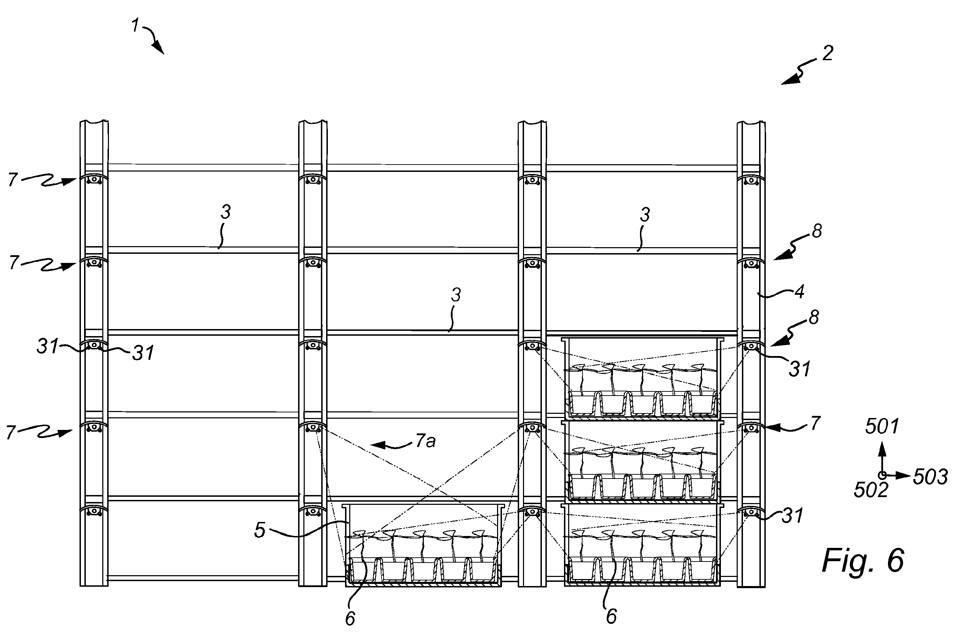

Fig. 6 illustrates a side-view of framework structure 2 in accordance with an embodiment of the invention. A set of storage containers 5 holding growing crops 6 is arranged in the framework structure 2. Here it can be seen that a lighting device does not have to be associated with only a closest storage container 5, in fact, in one embodiment of the invention, the system controller 10 may control the illumination controller 30 of a lighting device 7 to illuminate a storage container 5 further away from the lighting device 7, as indicated by lighting device 7a. For example, in some applications it may be more beneficial for the growing crops 6 to be illuminated from a specific angle, e.g. an angle that is closer to 90° from the horizontal plane of the storage container 5. Then, the system controller 10 may set a lighting device that is disposed at a more elevated position (elevated in reference to the storage container along a vertical axis 501) in order to achieve a desired angle (and/or spread) of incident light towards the growing crops 6.

Moreover, the illuminated cultivation storage system 1 in accordance with the invention is also capable of creating desirable air flow paths by efficient control of the lighting devices 7. In more detail, the system controller 10 may be configured to control the illumination controller(s) of the system 1 such that all or most of the lighting devices 7 disposed around an empty storage tunnel (such as the left-most tunnel in Fig. 6) are turned on, whereby a desirable thermal gradient within the framework structure can be accomplished and an empty storage tunnel can be used as a "thermal tunnel".

Fig. 7a illustrates a lighting device 7 and a liquid cooling arrangement (in the form of a fluid channel 32a, a heat sink 32b and a liquid cooled convector 33) in a cross-sectional view, the cross-sectional surface being perpendicular to an elongated axis of the lighting device 7. The liquid cooling arrangement 8 includes a heat sink 32b on which the light sources 31 (e.g. LED(s) 36 with optical lenses 37) are arranged. The heat sink 32b is arranged to cool the lighting device 7. The heat sink 32b preferably comprises one or more fluid channels 32a through which a cooling fluid (e.g. water or air) may run in order to more efficiently transport heat away from the semiconductor chip 36 on which the LED is arranged, of the lighting device 7. However, since a significant portion of the power generated by the lighting device 7 (and more specifically the LEDs 31 of the lighting device 7) is radiation which heats the surrounding air, a liquid cooled convector 33 is attached to the lighting device 7. The liquid cooled convector preferably comprises one or several fluid channels (indicated by the circles in the convector 33) through which a cooling fluid (e.g. water or air) runs. Further, the fluid channels through the liquid cooled convector 33 can be arranged to form a first liquid circuit and the fluid channels 32a through the heat sink 32b can be said to form a second liquid circuit, in the liquid cooling arrangement 8. The two liquid circuits may be independent or arranged sequentially. If the liquid circuits are arranged sequentially, the cooling fluid flowing in the liquid cooling arrangement may be arranged such that it initially flows through the first liquid circuit and subsequently through the second liquid circuit in order to more efficiently utilize the cooling fluid. This is due to the fact that the lighting devices 7 have a higher temperature as compared to the surrounding air, therefore the cooling fluid can be allowed to have a higher temperature when flowing through the second liquid circuit and still achieve an adequate cooling effect.

Moreover, the convector 33 may be arc-shaped and attached to an upper surface of the lighting device 7 in order to shield the lighting device from e.g. falling dirt or debris in the framework structure. Also, the convector 33 may have a bottom surface (i.e. the surface facing the lighting device 7) at least partly covered by a light reflecting sheet in order to further improve the illumination of the growing crops in the storage system. The reflective capability of the bottom surface of the convector 33 is indicated by the broken lines illustrating a light path. Further, the top surface of the liquid cooled convector 33 can be provided with a light reflecting surface or sheet in order to further spread emitted light within the storage system. Alternatively, the whole liquid cooled convector 33 may have an exterior surface arranged to reflect incident light.

Further, in one embodiment, the convector may comprise output nozzle(s) (not shown) configured to irrigate the growing crops of at least one container. Moreover, the convector 33 may the comprise control circuitry connected to the illumination controller of the lighting device and/or the system controller, whereby the irrigation of the growing crops can be controlled by the system controller. Thus, a more complete and automated illuminated cultivation storage system may be achieved with integrated lighting, irrigation and cooling.

Fig. 7b schematically illustrates an embodiment with one light source 31 (e.g. an LED 36) having dual light distribution by means of an optical arrangement 37 (e.g. a suitable lens).

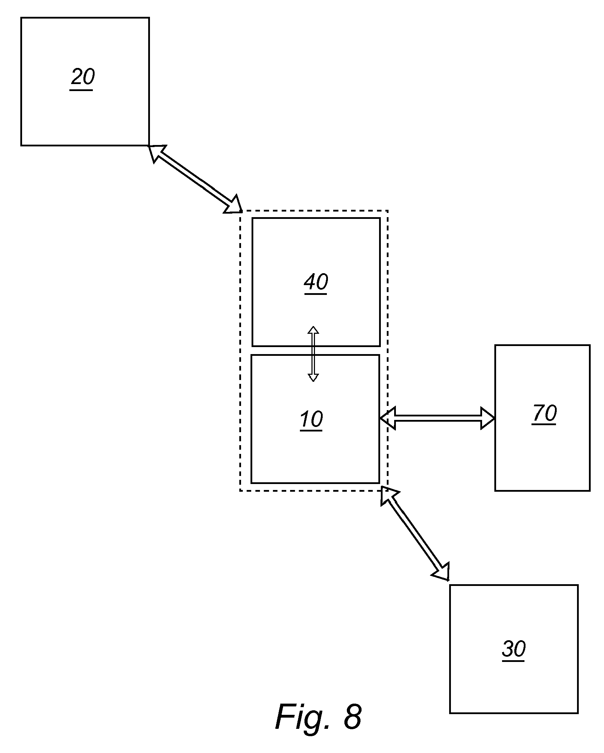

Further, Fig. 8 is a schematic flow chart illustration indicative of the communication path(s) between various devices or controllers within the illuminated cultivation storage system. In more detail, the system controller 10 is arranged to control the illumination controller(s) 30, indicated by the doubleheaded arrow, whereby the illumination controller(s) can transmit operational parameters of an associated lighting device and the system controller 10 can act based on this information. Moreover, the system controller 30 is also connected to a central load handling unit 40 configured to control and/or to communicate with the load handling devices 20. The system controller 10 may thereby receive information comprising positional data of each storage container within the framework structure of the storage system. The central load handling unit 40 may preferably also be configured to send control signals to the load handling devices in order to move storage containers in to, out of or within the framework structure and/or to improve ventilation within the framework structure by re-arranging storage containers. The central load handling unit 40 and the system controller may also be integrated into a single unit as indicated by the broken lines.

Further, the system controller 10 may then based on the input received from the load handling device(s) 20 (or alternatively from input received from the central load handling unit or an operator) keep track of every storage container within the framework structure in order to control the illumination controller(s) such that the growing crops contained by the storage containers are illuminated in an optimized way. The system controller 10 may further be configured to receive instructions regarding the operation of the illumination controller(s) from a database or memory unit 70 comprising computer-readable instructions. The instructions regarding the operation of the illumination controller may for example be in the form of illumination schemes regarding appropriate or desired illumination characteristics (in terms of light intensity and spectral distribution) for the growing crops held by the storage containers. The schemes may be different for different growth cycles of the growing crops, whereby the system controller may be configured to control the illumination controller such that the associated lighting device illuminates the growing crops accordingly. Alternatively, or additionally, the system controller 10 may be configured to control the load handling devices (directly or via the central load handling unit 40) to move the growing crops in accordance with the illumination schemes such that the storage containers are moved to a specific volume within the framework structure where the associated lighting devices have the desired illumination characteristics.

The system controller 10 may also be configured to set the illumination controller(s) 20 in an enabled or disabled state based on the presence of a storage container in a specific volume within a storage tunnel. However, the system controller 10 may further set the illumination controller(s) in an enabled state or a disabled state based on a number of parameters or criteria, such as, e.g. temperature control in a specific section, creating suitable temperature gradients, control of airflow by enabling or disabling the lighting devices in order to create air flow channels by thermal means, price of electricity, specific plant characteristics of the growing crops, etc.

Even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. An illuminated cultivation storage system comprising:
a framework structure having a three-dimensional framework of horizontal and vertical structural elements forming a grid of vertical storage tunnels or horizontal storage tunnels, wherein each tunnel is arranged to receive a plurality of storage containers holding growing crops, the storage containers being arranged in a stacked formation in a vertical storage tunnel or in a train formation in a horizontal storage tunnel;
**characterized by**
a plurality of lighting devices attached to said framework structure, each lighting device being associated with a volume in at least one storage tunnel, and comprising at least one light source configured to illuminate a storage container residing in said volume;
a liquid cooling arrangement coupled to said plurality of lighting devices, and configured to cool at least one of the lighting devices;
an illumination controller connected to each lighting device and configured to control ON/OFF, light intensity and spectral distribution of said lighting source(s) in order to modulate growth of said growing crops illuminated by the lighting device; and
a system controller arranged to control said illumination controller(s) in order to set the illumination controller(s) in an enabled state, in which the lighting device is controlled by said illumination controller, and a disabled state, in which the light device is turned OFF, based on position information relating to a position of each storage container in said grid, such that a particular illumination controller is disabled when a storage container is not present in the volume associated with a lighting device controlled by this particular illumination controller.

2. The illuminated cultivation storage system according to claim 1, wherein each lighting device is arranged above the volume associated therewith.

3. The illuminated cultivation storage system according to claim 1 or 2, wherein said light sources of said lighting devices are arranged only in a vicinity of the vertical structural elements.

4. The illuminated cultivation storage system according to claim 3, wherein a subset of the lighting devices are mounted to a vertical structural element of the framework structure.

5. The illuminated cultivation storage system according to claim 3 or 4, wherein each of said lighting devices comprises multiple light sources distributed along said vertical structural element of the framework structure.

6. The illuminated cultivation storage system according to claim 1 or 2, wherein each lighting device comprises multiple light sources and is arranged such that the light sources are distributed between a pair of adjacent vertical structural elements.

7. The illumination cultivation storage system according to claim 6, wherein a subset of the lighting device are mounted to a horizontal structural element.

8. The illuminated cultivation storage system according to claim 6, wherein a subset of the lighting devices are mounted to and extend between a pair of adjacent vertical structural elements of said framework structure.

9. The illuminated cultivation storage system according to claim 6, wherein the storage tunnels are horizontal and a subset of the lighting devices are mounted to and extend between a pair of adjacent horizontal structural elements of said framework structure.

10. The illuminated cultivation storage system according to any one of claims 6-9, wherein at least one of said lighting devices comprises at least one light bar and has dual light distribution in order to be capable of illuminating at least a portion of two adjacent storage compartments.

11. The illuminated cultivation storage system according to any one of the preceding claims, wherein said lighting devices are integrated with said framework structure.

12. The illuminated cultivation storage system according to any one of the preceding claims, wherein at least one of the lighting devices comprises at least one light source mounted on a heat sink, and wherein said liquid cooling arrangement includes channels formed in the heat sinks.

13. The illuminated cultivation storage system according to any one of the preceding claims, wherein said liquid cooling arrangement comprises liquid cooled convectors.

14. The illuminated cultivation storage system according to claim 13, wherein at least one of the convectors is attached to a lighting device.

15. The illuminated cultivation storage system according to claim 13, wherein the liquid cooling arrangement comprises a first liquid circuit coupled to the convectors and a second liquid circuit coupled to the lighting devices, wherein the first and second liquid circuits are independent.

16. The illuminated cultivation storage system according to any one of the preceding claims, wherein said liquid cooling arrangement comprises channels integrated in said framework structure.

17. The illuminated cultivation storage system according to claim 3 or 4, wherein said liquid cooling arrangement comprises channels integrated only in the vertical structural elements of said framework structure.

18. The illuminated cultivation storage system according to any one of the preceding claims, further comprising at least one load handling device operating laterally along openings of said grid of vertical or horizontal storage tunnels, said at least one load handling device being configured to move said storage containers arranged in said vertical or horizontal tunnels.

19. The illuminated cultivation storage system according to any one of the preceding claims, wherein said system controller is further arranged to control the state of a particular illumination controller based on a temperature in a vicinity of this particular illumination controller.
